# EUROPEAN PATENT SPECIFICATION

(11) **EP 3 906 786 B1**
(45) Date of publication and mention of the grant of the patent: **13.08.2025**
(21) Application number: 21177026.8
(22) Date of filing: 28.04.2015
(51) Int. Cl.: A23J 1/02, A23J 3/04, A23K 20/147, A23L 29/00, A23L 33/17, A23L 2/66

(54) **METHOD OF MAKING SMALL PARTICLE SIZED PROTEIN COMPOSITIONS**
VERFAHREN ZUR HERSTELLUNG VON PROTEINZUSAMMENSETZUNGEN MIT KLEINER PARTIKELGRÖSSE
PROCÉDÉ DE PRÉPARATION DE COMPOSITIONS DE PROTÉINE À PETITE TAILLE PARTICULAIRE

(30) Priority: 28.04.2014 US 201461985260 P
(43) Date of publication of application: 10.11.2021
(62) Divisional of application: 15786728.4
(73) Proprietor: International Dehydrated Foods, Inc., Springfield, MO 65808 (US)
(72) Inventor: DAKE, Roger Lynn, Springfield, 65810 (US); LYNCH, Stephanie, Springfield, 65804 (US); POWLEY, Tobin Scot, Nixa, 65714 (US)
(74) Representative: Dehns Germany Partnerschaft mbB

(56) References cited:
- WO-A1-2012/121612
- WO-A1-2013/108986
- WO-A1-94/01003

## Description

### BACKGROUND

### 1. Field of the Invention

This disclosure relates to a process for preparing a high protein, small particle sized composition from animal meat or other animal parts. More particularly, the disclosure pertains to small particle sized protein compositions prepared from poultry and methods of making the same.

### 2. Description of Related Art

Protein is an essential nutrient for humans and animals. Traditional sources of proteins include, for example, animal meat (e.g., poultry, beef, pork, fish, etc.) that are complete in essential and indispensable amino acids; and various plants (e.g., soybean or pea) that are also rich in protein. Convenience foods such as bars, shakes, and smoothies are becoming more and more popular and have become important sources of protein intake. Other protein-rich products such as protein shakes, are used by athletes to maintain or grow muscle mass.

Protein powders are used extensively in making these convenience foods or specialty products. To date, most protein powders are obtained from plant sources, such as soy or pea. Other than protein powders prepared from milk, whey, or eggs, high-protein powders from other animal sources have not been reported or used in such protein-rich products. More particularly, high quality protein powders having small particle sizes that are derived from an animal meat have not been reported. Documents WO 2013/108986 A1, WO 94/01003 A1 and WO 2012/121612 A1 relate to methods for increasing the hydrolysis of meat proteins, in particular, to obtain a hydrolysate.

In detail, WO 2013/108986 A1 relates to a method for increasing the hydrolysis of meat proteins by treating 10-40 wt% of a ratio of a substrate to water, 0.05-4.0 wt% of a proteinase to a substrate, and the balance of water using a high pressure device for a high pressure treatment time of 4-48 hours and at a high pressure treatment pressure of 25-400 MPa and at a high pressure temperature of 25-60 °C. WO 94/01003 A1 discloses a method which comprises a series of steps, with raw meat as a starting material, including a hydrolysis with a specified neutral and alkaline protease. The meat hydrolysate is reported to exhibit excellent organoleptic properties and can be used as a flavoring additive to a soup concentrate. WO 2012/121612 A1 relates to a method of preparing a hydrolysate composition from a meat source, including the steps of: a) hydrolyzing at least one type of protein in the meat source, at least partly due to the use of at least one protease, and b) restricting the hydrolysis process for a period of between 2 to 5 hours by deactivating the protease to form a hydrolysate mixture, characterized by the further step of c) sourcing the protein from mechanically separated meat.

### SUMMARY

A method for making a protein composition having small particle size from a starting material derived from an animal source according to claim 1 is proposed herein, claim 1 defining the scope of the present invention. Embodiments are indicated in claim 2 and in the description that follows hereinbelow.

The disclosed instrumentalities advance the art by providing methods for preparing a high quality protein composition having small particle size from an animal source which is poultry. Examples of animal sources may include but are not limited to chickens or turkeys.

The process improves upon existing processing steps in a unique way. An enzyme is used in the process of making the protein composition according to the invention. A pressure cooking step may be employed in the disclosed process. It has been unexpectedly discovered that the process according to the invention produces higher quality proteins by improving the amino acid composition and ratio extracted from normal raw materials. The protein composition may contain more than 70%, 80%, 85%, or 90% (w/w) of protein but less than 12%, 10%, 8%, 5%, 3%, 2%, 1%, or 0.5% (w/w) of fat.

The composition of this disclosure may particularly provide a high quality, complete animal protein powder from poultry that is insoluble but has small particle size. Small particle size is advantageous in preparation of special foods that must be administered through tube feeding, as well as many other applications.

The amino acid profile of the soluble proteins may be less desirable than the insoluble proteins. The disclosed composition may contain insoluble protein whose quality is improved by removal of the soluble protein.

Examples of starting material may include but are not limited to meat, boneless meat or poultry trims from chickens or turkeys. In one aspect, the starting material may be processed (for example, through mechanical grinding) to generate a processed material in the form of fine particles or powders. The starting material (processed or unprocessed) may be incubated with water at a temperature between 65.6 °C and 93.3 °C (150 °F and 200 °F) to form a cooked material.

The one or more enzymes may incubate for a time period between 1 and 3 hours, particularly about 2 hours. The one or more enzymes is a protease. The one or more enzymes may have a working concentration in the range of 0.1%-0.5%, or about 0.2% by weight.

The heating step is performed with a temperature effective in denaturing the enzyme for a sufficient period of time. The temperature effective in denaturing the enzyme depends on the nature of the enzyme. As proposed herein, such denaturing process is performed at a temperature at least 82.2 °C (180 °F) for at least five minutes to fully cook the mixture and denature the enzymes and form a cooked slurry. The cooked slurry according to claim 1 may be further cooked (or incubated) at a temperature between about 93.3 °C - 148.9 °C (200 °F and 300 °F) under a pressure between 0 and 4.1 bar (0 and 60 psig), or between 69 and 103 (10 and 15 psig), for a time period between 15 minutes and 6 hours, or between 1 and 3 hours, to form a fully cooked slurry. The fully cooked slurry may be separated (for example, by centrifugation) into solid and liquid fractions, and the solid fraction may be collected as the desired protein composition. The obtained composition may be dried and processed into particle size of smaller than 100 µm (microns). The liquid fraction according to claim 1 may contain certain amount of the denatured enzyme. In another aspect, the majority of the denatured enzyme is in the solid fraction.

Either no pH adjusting agent is added during the disclosed process to adjust the pH of the slurry or any intermediate productsor a pH adjusting agent is be added during the disclosed process to adjust the pH of the slurry or any intermediate products.

The method may further contain an acidification step to reduce the pH of the protein composition obtained above. In another embodiment, the acidification step may include adding an acidic agent to the slurry obtained above or partially hydrolyzing the slurry, wherein the acidic agent is selected from the group consisting of carbonated water, carbon dioxide gas, and combination thereof. In one aspect, acid hydrolysis may help removing fat (lipid) from the composition. In another aspect, acid hydrolysis may facilitate selective fractionation of proteins and improve amino acid profiles, especially to increase the content of essential amino acids.

The method may further contain a microfiltration step which selectively enriches one or more amino acids or one or more proteins in the composition obtained above. By way of example, the microfiltration step may be performed by passing the slurry through a membrane filter system designed to either remove or retain selected proteins and/or amino acids.

The protein composition thus obtained may be used in numerous products, such as, by way of example, protein drink, smoothies, or other nutritional beverages.

The disclosed high protein, low fat compositions produced according to the method according to the invention may contain high quality proteins comparable to those of egg proteins. In one aspect, the disclosed composition may have a Protein Efficiency Ratio (PER) score of greater than 60, 70, 80, 85, 90, 95 or 100 as compared to egg protein on PER tests performed on rats. The composition may contain amino acids having an amino acid profile that scores at least 80, 95, 98, or 99 Protein Digestibility Corrected Amino Acid Score (PDCAAS). The composition may also contain amino acids having an amino acid profile that scores a perfect 100 Protein Digestibility Corrected Amino Acid Score (PDCAAS). The composition may contain essential amino acids having an amino acid profile that scores higher in a Digestible Indispensable Amino Acid Score (DIAAS) than regular broths prepared from chicken without using enzyme and/or without a pressure cooking step.

The composition produced according to the method according to the present invention may be used as a dietary supplement or may be used as a component of a dietary supplement. The supplement may serve various functionalities when administered to a living organism, such as a mammal, a fish, a bird or a domestic animal. These functionalities may include but are not limited to promoting growth of certain gut bacterium, maintaining a specific gut microbiome, enhancing immunoresponse, modulating inflammatory response of the mammal, or combination thereof. In one particular aspect, the disclosed composition may be used as a prebiotic that promotes gut microbiome or helps balance the different bacterial species in the gut of the organism. The term microbiome refers to the ecological community of commensal, symbiotic, and pathogenic microorganisms that share a body space within a mammal.

### DETAILED DESCRIPTION

This disclosure relates to a process for making a complete, high quality protein composition from an animal source, such as poultry (e.g., chicken or turkey). The compositions produced according to the method of the present invention have small particle sizes. Individual products that are made with very fine particle size are of special value because they can be used in significant amounts in liquid products such as shakes, protein sports drinks, and other beverages that require smooth texture and mouth feel.

Chicken is widely consumed in numerous classic and creative applications as a healthy, nutritious food that is a great source of protein. In one aspect, this disclosure relates to a process to make a complete, high quality, low fat, and high protein concentrate from chicken that is available to food processors and consumers in a convenient form as a shelf stable powder. The disclosed protein composition is about the same protein percentage as soy and whey protein concentrates and isolates. The amino acid profile offered by this composition is well balanced and obtains the maximum score for Protein Digestibility Corrected Amino Acid Score (PDCAAS).

The composition produced according to the present invention may be used by food processors and consumers in a convenient form, for example, as a shelf-stable powder.

Based on Protein Efficiency Ratio (PER) testing results, the protein composition disclosed herein is comparable to the highest quality proteins such as egg, and in many cases even exceeds the scores of whey and soy proteins. The PER score may be derived from growth weight of an animal fed a measured weight of food containing that protein as the only protein in the ration.

With a complete, high quality protein source such as the composition of this disclosure, there is no need to mix multiple protein sources in order to provide a balanced protein source, and no amino acids need be specifically supplemented into the disclosed composition.

The composition produced according to the present invention may provide an optimum balance of amino acids in a convenient form which is enhanced by its very small particle size. To date other insoluble chicken powders on the market have not been able to achieve the small particle size of the disclosed composition.

Table 1 shows the typical amino acid composition in total chicken meat protein (USDA SR-21 released December 7, 2011 by U.S. Department of Agriculture).

**TABLE 1 TYPICAL AMINO ACID COMPOSITION OF MEAT PROTEIN FROM CHICKENS**

| | Weight (mg) |
|---|---|
| Aspartic Acid | 3870 |
| Threonine | 1834 |
| Serine (w/w) | 1494 |
| Glutamic Acid | 6504 |
| Glycine | 2133 |
| Alanine | 2369 |
| Valine | 2155 |
| Methionine | 1203 |
| Isoleucine | 2293 |
| Leucine | 3259 |
| Tyrosine | 1466 |
| Phenylalanine | 1724 |
| Histidine | 1348 |
| Lysine | 3689 |
| Arginine | 2619 |
| Proline | 1785 |
| Hydroxyproline | ND |
| Cysteine | 556 |
| Tryptophan | 507 |
| Total | 43400 |

| | |
|---|---|
| ND: Not Determined | |

Due to conditions such as kidney disease, some people must limit their dietary protein intake. For these people, proteins of the highest quality are optimum for sourcing and consumption. In one embodiment, the disclosed composition may be easier for kidneys to process than regular digested proteins.

In one aspect, the disclosed process may be used to turn lower value raw poultry materials into a high value protein powder without using additives. In another aspect, specific processing equipment may be used to achieve the specific result of very small particle size. By way of example, several representative steps of certain processes are described below, wherein, as mentioned, the present invention is defined in claim 1:
1. In one embodiment, raw chicken muscle such as boneless meat or trims may be used as the starting material. Alternatively, raw chicken frames and carcasses may be converted to mechanically separated chicken using equipment and techniques available in the art.
2. This material may be finely ground to allow optimum fractionation of protein from fat and other non-protein materials. Pieces of the starting raw material may be ground to an average size of less than 5mm, 4mm, 3mm, 2mm, or less than1 mm.
3. The finely ground chicken may be cooked by any number of common processes known to the art, then followed by separation of liquid from solid fractions by screening, pressing, or passing through a centrifugal decanter as common in the art. The solid material is then milled to a fine texture, homogenized, and dried according to several available drying systems. By drying the product in a Tornado Windhex type dryer, the particle size is reduced more than standard drying systems and can attain a particle size less than 200 or 100 µm (microns). If spray drying or other drying means are used, further milling in specialized equipment is needed, and perhaps is followed by screening and classifying by size to produce a product with average particle size less than 100 microns.
3. Another similar approach (see Example in this embodiment) to making a very small particle size product would be to provide very finely ground raw ground chicken from trims, whole boneless muscle, or mechanically separated chicken.
4. The finely ground raw material may be heated to at least 73.9 °C (165 °F) for at least 5 minutes to fully cook the product.
5. The cooked slurry may be passed through a centrifugal decanter or press to separate liquid from insoluble product.
6. The pressed or decanted meat would then be treated with enzymes to partially break down cross linked collagen bonds and thus open and loosen the fibrous structure of the cooked product. Up to three parts water might be added if necessary to provide a mixable, pumpable slurry for further processing steps. Enzyme treatment step time and temperature would be adjusted to meet optimum results, but a typical process would be two hours at 54.4 °C (130°F).
7. The amount of enzyme would vary with individual enzymes chosen, but a typical example would be an amount of each enzyme used added at 0.1% to 0.3% of the solids weight.
8. After enzyme treatment, the slurry may be cooked to denature the enzymes. It also may be cooked in excess of the time and temperature needed to denature the enzymes to provide other desirable effects and attributes of the product. For examples, the cooking typically would be at least 185°F for 5 minutes as a basic process, but might be cooked 2 or 3 hours or more at 103 kPa (15 psig) (about 121 °C (250 °F)) for special outcomes.
9. The slurry can be decanted to remove the liquid fractions including fat, thus reducing the fat content of the finished product and increasing protein percentage.
10. The enzyme treated, re-cooked slurry may be finely milled before spray drying. Or, the slurry can be dried in a fluid bed dryer followed by milling to very fine particle size. Alternatively, the decanted product could be dried in a Tornado Windex type dryer to dry and pulverize to a very fine particle size simultaneously.
11. Extra milling, screening, and size classifying can be done at the end of the process to provide product particle size of specific ranges.

In another embodiment, an alternative process is described below:

The raw material may be finely ground to allow optimum fractionation of protein from fat and other non-protein materials. The finely ground chicken starting material may mixed with water to make a free flowing slurry. Protease enzyme(s) may be added to the mixture at an optimum percentage that depends on the enzymes used and the finished product desired. This mixture is heated to an optimum digesting temperature and allowed to react for an optimum time. Process times and temperatures are varied for best results, but an example would be a weight of enzyme equal to 0.2% of the protein content of the raw material, a temperature of 54.4 °C (130°F), and a two hour reaction time.

After enzyme treatment, the mixture is heated to at least 82.2 °C (180°F) for at least five minutes to fully cook the mixture and denature the enzymes. This initial cooking time and temperature may be varied to achieve desired results. In one process, the cooking time and temperature may be elevated to more than 110 °C (230°F) to achieve more tenderness and help break down the structure of the product, so milling can more easily reduce particle size to the desired range.

The cooked slurry may be passed through a centrifugal decanter to separate into liquid and solid fractions. The separated fat is sent to other product uses, and the broth may be sent to other product uses or re-incorporated into the meat fraction.

The meat fraction, with or without the broth, may be finely milled and dried in standard dryers such as spray dryers or other appropriate dryers known in the art. Alternatively, the meat may be dried in a dryer such as a fluid bed dryer followed by finely milling; or, the cooked meat slurry may be dried in a type of dryer that dries and mills into a fine powder simultaneously, such as a Windhex Tornado Dryer.

The dried meat may or may not need to be further milled, screened, and or classified by particle size to provide very fine particle sizes as needed, as small as <100 µm (microns).

The processing step combination of enzyme digestion and extended cooking of the finely ground product results in a high yield of protein that has higher quality than regular products made from animal sources, regardless of the materials or cooking process used. The combination of enzymatic and thermal processes extract and provide more essential amino acids than those extracted using existing processes.

In one embodiment, the protein compositions may be used as an ingredient in food or beverage products. In another embodiment, the composition obtained may be used in numerous applications as a wholesome, all natural ingredient. The disclosed extract may also be used to prepare protein drinks, smoothies, or other nutritional beverages.

It is to be noted that, as used in this specification and the claims, the singular forms "a," "an," and "the" include plural referents unless the context clearly dictates otherwise. Thus, for example, reference to "a device" may include reference to one device, as well as two or more devices, unless the context clearly limits the reference to one device.

The terms "between" and "at least" as used herein are inclusive. For example, a range of "between 5 and 10" means any amount equal to or greater than 5 but equal to or smaller than 10.

Unless otherwise specified, the percentage of certain component in a composition is by weight of total solid. Various commercially available products may have been described or used in this disclosure. It is to be recognized that these products are cited for purpose of illustration only. Certain physical and/or chemical properties and composition of the products may be modified without departing from the spirit of the present disclosure. One of ordinary skill in the art may appreciate that under certain circumstances, it may be more desirable or more convenient to alter the physical and/or chemical characteristics or composition of one or more of these products in order to achieve the same or similar objectives as taught by this disclosure.

### EXAMPLES

The following examples are provided to illustrate the present invention, the scope of which is defined in claim 1.

### Example 1 Preparation of a protein composition having small particle size from poultry

Raw mechanically separated chicken (MSC) was cooked (with water or steam) to 85.0 °C (185 °F) for about 5 to 55 minutes before being pumped through a centrifugal decanter which separated the liquid fractions from the insoluble fraction. The insoluble fraction was mixed with water at a ratio of about two parts water to one part chicken insolubles and the temperature of the mixture was adjusted to 54.4 °C (130 °F). Protease enzymes (e.g., Alcalase, flavorzyme, liquipanol, protamex, Protease FNP, alkaline protease L-660) were added at 0.2% (by weight) of the solids content of the chicken and the batch was well mixed. The batch was held for about two hours for the enzyme treatment to complete.

After the enzymatic digestion step, the batch was cooked at 116 --121 °C (240-250 °F) (69 - 103 kPa (10-15 psig)) for three hours which denatured the enzymes and further broke down the protein structure. The cooked slurry was then passed through a second decanter which removed the liquid fraction.

The cooked, decanted insoluble fraction was added to about equal parts water and was milled using a Silverson homogenizing mixer. The resultant finely milled slurry was dried and evaluated for mouth feel. The result was a very smooth texture that did not have undesirable gritty or sandy mouth feel.

### Example 2 Preparation of a protein composition having small particle size from poultry without an initial cooking step

Raw mechanically separated chicken (MSC) was placed into a vessel with two parts water to one part chicken solids. After thorough mixing, the mixture was separated into solid and liquid fractions using a centrifuge. The liquid fraction was discarded, and the meaty solid fraction was retained for further processing.

This solid fraction was mixed with about 3 parts water to one part solids to form a slurry. Two protease enzymes (Alcalase and flavorzyme) were added at 0.2 percent (by weight) of the solids and were thoroughly mixed into the slurry. The slurry-enzyme mixture was heated to 54.4 °C (130 °F) and incubated for 2 hours with intermittent agitation. After this incubation time, the mixture was cooked at 87.8 °C (190 °F) for 10 minutes to completely denature the enzymes. The mixture was then centrifuged at 3,600 rpm for 5 minutes to separate off the liquid fraction. The resultant cooked decanted slurry was dried and evaluated for texture, mouth feel etc. and was found to have a silky smooth, almost creamy mouth feel.

It is to be recognized that the disclosed composition differs from Mechanically Separated Chicken (MSC) at least in that the disclosed composition contains various high quality proteins extracted from MSC, with various low quality proteins from MSC removed.

## Claims

1. A method for making a protein composition having small particle size from a starting material derived from an animal source, said method comprising:
(a) mixing said starting material with water at room temperature or lower,
(b) separating solid fraction from liquid fraction after mixing step (a),
(c) incubating said solid fraction of step (b) with an enzyme at a temperature between about 48.9 °C and 60.0 °C (120 °F and 140 °F) for a time period between 1 hour and 3 hours,
and
(d) heating the mixture containing enzyme from step (c) to at least 82.2 °C (180 °F) for at least five minutes to fully cook the mixture and denature the enzyme and form a fully cooked slurry,
(e) separating the fully cooked slurry of step (d) into solid and liquid fractions,
(f) collecting said solid fraction to obtain said protein composition,
(g) drying the solid fraction of step (f), and
(h) processing the dried solids into a particle size of smaller than 100 µm (microns),
wherein the enzyme is protease, and wherein the animal source is poultry.

2. The method of claim 1, wherein the animal source is chicken or turkey.

## Patentansprüche

1. Verfahren zur Herstellung einer Proteinzusammensetzung mit kleiner Teilchengröße aus einem von einer tierischen Quelle stammenden Ausgangsmaterial, wobei das Verfahren umfasst:
(a) Mischen des Ausgangsmaterials mit Wasser bei Raumtemperatur oder niedriger,
(b) Abtrennen einer festen Fraktion von einer flüssigen Fraktion nach dem Mischschritt (a),
(c) Inkubieren der festen Fraktion aus Schritt (b) mit einem Enzym bei einer Temperatur zwischen etwa 48,9 °C und 60,0 °C (120 °F und 140 °F) für eine Zeitdauer zwischen 1 Stunde und 3 Stunden,
und
(d) Erhitzen der enzymhaltigen Mischung aus Schritt (c) auf mindestens 82,2 °C (180 °F) für mindestens fünf Minuten, um die Mischung vollständig zu kochen und das Enzym zu denaturieren und eine vollständig gekochte Aufschlämmung zu bilden,
(e) Trennen der vollständig gekochten Aufschlämmung aus Schritt (d) in eine feste und eine flüssige Fraktion,
(f) Sammeln der festen Fraktion, um die Proteinzusammensetzung zu erhalten,
(g) Trocknen der festen Fraktion von Schritt (f), und
(h) Verarbeitung der getrockneten Feststoffe zu einer Teilchengröße von weniger als 100 µm (Mikron),
wobei das Enzym Protease ist, und wobei die tierische Quelle Geflügel ist.

2. Verfahren nach Anspruch 1, wobei die tierische Quelle Huhn oder Truthahn ist.

## Revendications

1. Procédé de fabrication d'une composition protéique à faible granulométrie à partir d'un matériau de départ dérivé d'une source animale, comprenant
(a) le mélange de cette matière première avec de l'eau à température ambiante ou inférieure,
(b) séparer la fraction solide de la fraction liquide après l'étape de mélange (a),
(c) incuber ladite fraction solide de l'étape (b) avec une enzyme à une température comprise entre environ 48,9 °C et 60,0 °C (120 °F et 140 °F) pendant une période de temps comprise entre 1 heure et 3 heures,
et
(d) chauffer le mélange contenant l'enzyme de l'étape (c) à au moins 82,2 °C (180 °F) pendant au moins cinq minutes pour cuire complètement le mélange et dénaturer l'enzyme et former une suspension entièrement cuite,
(e) séparer la suspension entièrement cuite de l'étape (d) en fractions solide et liquide,
(f) collecte de la fraction solide pour obtenir la composition protéique,
(g) séchage de la fraction solide de l'étape (f), et
(h) transformer les solides séchés en particules d'une taille inférieure à 100 µm (microns),
dans lequel l'enzyme est la protéase et dans lequel la source animale est la volaille.

2. Le Procédé de la revendication 1, dans lequel la source animale est le poulet ou la dinde.
